# EUROPÄISCHE PATENTSCHRIFT

(11) **EP 4 285 045 B1**
(45) Veröffentlichungstag und Bekanntmachung des Hinweises auf die Patenterteilung: **31.12.2025**
(21) Anmeldenummer: 21749624.9
(22) Anmeldetag: 27.07.2021
(51) Int. Cl.: F16L 23/08

(54) **PROFILSCHELLE**
PROFILED CLAMP
COLLIER PROFILÉ

(30) Priorität: 26.01.2021 DE 102021101692
(43) Veröffentlichungstag der Anmeldung: 06.12.2023
(73) Patentinhaber: NORMA Germany GmbH, 63477 Maintal (DE)
(72) Erfinder: VON BREITENBACH, Gerrit, 63477 Maintal (DE); AKREMI, Belal, Newbury Berkshire RG19 6HW (GB); RUMBAUSKIENE, Tatjana, Newbury Berkshire RG19 6HW (GB); JAROSZ, Mateusz, Newbury Berkshire RG19 6HW (GB); MARQUES, Jorge, Newbury Berkshire RG19 6HW (GB)
(74) Vertreter: Patentanwälte Olbricht Buchhold Keulertz
(86) Internationale Anmeldenummer: PCT/EP2021/070978
(87) Internationale Veröffentlichungsnummer: WO 2022/161649

(56) Entgegenhaltungen:
- EP-A1- 0 403 379
- WO-A1-2018/140916
- DE-A1- 102005 035 198
- DE-U1- 29 816 889
- US-A- 2 897 569

## Beschreibung

Die Erfindung betrifft eine Profilschelle mit einem ersten profilierten Schellenabschnitt und mit einem zweiten profilierten Schellenabschnitt und optional mit mindestens einem weiteren profilierten Schellenabschnitt, mit denen unter Aufbringung einer Axialkraft zwei Flanschteile miteinander verbindbar sind, wobei an einem Ende des ersten Schellenabschnitts ein erster Spannkopf und an einem Ende des zweiten Schellenabschnitts ein zweiter Spannkopf zur Bildung einer Spanneinrichtung ausgebildet sind, wobei die den Spannköpfen gegenüberliegenden Enden der Schellenabschnitte mittels einer gelenkigen Verbindung miteinander oder mit mindestens einem weiteren Schellenabschnitt der Profilschelle verbunden sind.

Profilschellen sind zuverlässige und bekannte Verbindungselemente für die Verwendung in Industrie und Automobilbau. Profilschellen sind beispielsweise zum fluiddichten Verbinden von zwei axial aneinander anliegenden Rohr- oder Schlauchenden vorgesehen, die üblicherweise radial nach außen gerichtete Verbindungsflansche haben. Die Profilschelle wird dann auf die entsprechenden Flansche aufgesetzt, wobei durch Spannen der Profilschelle radiale und axiale Haltekräfte eingebracht werden.

WO 2008/102116 A2 offenbart eine Profilschelle, die zwei profilierte Schellenhälften aufweist. Die Profilierung der Schellenhälften ist so ausgebildet, dass eine Dreieck-, eine Dachkant- oder eine Trapezform dazu genutzt wird, zwei Flanschteile miteinander zu verbinden. Bei Aufbringen einer Umfangskraft in den Schellenhälften werden die beiden Flanschteile unter Bildung einer Axialkraft miteinander verbunden. Die Profilschelle weist eine Spanneinrichtung auf, die durch einen ersten Spannkopf und einen zweiten Spannkopf gebildet ist, wobei die Spannköpfe jeweils endseitig an einer der Schellenhälften ausgebildet sind. Die beiden Spannköpfe werden mit einem Schraubelement miteinander verbunden, so dass die Profilschelle durch Festziehen des Schraubelements gespannt wird.

Die beiden Schellenhälften sind diametral gegenüber der Spanneinrichtung mit einem Verbindungselement miteinander verbunden, das häufig aus einem Federstahlmaterial ausgebildet ist. Das Verbindungselement ist an die jeweiligen Endseiten der Schellenhälften angeschweißt. Durch die federnden Eigenschaften des Verbindungselements entsteht eine gelenkige Verbindung zwischen den beiden Schellenhälften, so dass diese bei der Schellenmontage auf und zu bewegt werden können und dauerhaft miteinander verbunden sind.

DE 10 2016 103 988 A1 beschreibt ein weiteres Beispiel aus dem Stand der Technik, das auch in Figur 1 gezeigt ist. Die erste Schellenhälfte 10 und die zweite Schellenhälfte 11 sind mit einer gelenkigen Verbindung 14 in Form eines Flachbandabschnitt 15 gelenkig miteinander verbunden. Der Flachbandabschnitt 15 geht materialeinheitlich in die jeweiligen Schellenhälften 10 und 11 einteilig über. Mittig im Flachbandabschnitt 15 befindet sich ein Loch 26. Der Flachbandabschnitt 15 ist flexibel ausgebildet, so dass die beiden Schellenhälften 10 und 11 aufeinander zu und voneinander wegbewegt werden können, ohne dass der Flachbandabschnitt 15 geschädigt wird oder zu hohe Kräfte nötig sind. Bei einem Anziehen der Mutter 20 auf dem Schraubelement 18 treten die beiden Andruckfahnen 19 in Kontakt miteinander.

Weiter betrifft beispielsweise EP0403379A1 eine Verbindungsschelle für Auspuffleitungen. Die Verbindungsschelle weist insgesamt einen nach außen verjüngten V-förmigen Querschnitt auf und besteht aus einem einteiligen, offenen Ring, der durch zwei Spannpratzen verlängert wird.

An mindestens zwei Stellen seines Umfangs weist der Ring einen abgeflachten Teil auf, der einen Querstreifen bildet. Dieser Querstreifen erstreckt sich über die gesamte Breite des Rings, hat jedoch eine geringere Wandstärke als der Rest des Rings.

WO2018/140916A1 betrifft ebenfalls eine Profilschelle für Auspuffe bzw. Auspuffleitungen und ein Verfahren zum Verbinden solcher Leitungen vermittels einer Schelle.

Weiter beschreibt beispielsweise DE102005035198A1 eine Klammer für eine Rohrverbindung, wobei der von der Klammer am Verbindungsteil von Rohrelementen eingenommene Raum vermindert wird.

DE29816889U1 betrifft ferner eine Schelle mit zwei Flanschen, welche mit einer Spannvorrichtung versehen sind, wobei die Flansche der Schelle ein im Querschnitt U-förmiges Profil mit einem Basisschenkel und zwei Seitenschenkeln aufweisen und die Öffnungen der Flanschprofile einander gegenüberliegen.

Weiter beschreibt US2897569A eine Verbesserungen an einer Schelle und bezieht sich insbesondere auf eine Kupplung oder Befestigung durch die ein Paar von im Allgemeinen rohrförmigen Elementen miteinander verbunden werden. Die Kupplung ist besonders geeignet zum Verbinden rohrförmiger Teile, die beispielsweise in sanitären Rohrleitungssystemen eingesetzt werden.

Aufgabe der Erfindung ist die Weiterbildung einer Profilschelle zur Verbindung von zwei Flanschteilen unter Aufbringung einer möglichst hohen Axialkraft. Zudem soll die Profilschelle in der Konstruktion vereinfacht werden, so dass die Profilschelle insbesondere auf einfachere Weise herstellbar ist und aus wenigen Einzelteilen besteht.

Die Aufgabe wird erfindungsgemäß gelöst durch eine Profilschelle gemäß Anspruch 1. Weitere Ausführungsformen sind Gegenstand der Unteransprüche oder nachfolgend beschrieben.

Die erfindungsgemäße Profilschelle hat einen ersten profilierten Schellenabschnitt und einen zweiten profilierten Schellenabschnitt, wobei mit den profilierten Schellenabschnitten unter Aufbringung einer Axialkraft zwei Flanschteile miteinander verbindbar sind. Bevorzugt weist die erfindungsgemäße Profilschelle zwei oder drei profilierte Schellenabschnitte auf. An einem Ende des ersten Schellenabschnitts ist ein erster Spannkopf und an einem Ende des zweiten Schellenabschnitts ist ein zweiter Spannkopf zur Bildung einer Spanneinrichtung ausgebildet. Die den Spannköpfen gegenüberliegenden Enden der Schellenabschnitte sind mittels einer gelenkigen Verbindung miteinander verbunden oder die den Spannköpfen gegenüberliegenden Enden der Schellenabschnitte sind mittels gelenkiger Verbindungen mit einem weiteren Schellenabschnitt der Profilschelle verbunden. Die gelenkige Verbindung ist mittels eines mechanisch oder umformtechnisch bearbeiteten Flachbandabschnitts gebildet, der einstückig mit den Schellenabschnitten verbunden ist und eine definierte Flexibilität hat.

In einer ersten Ausführungsform weist die erfindungsgemäße Profilschelle zwei profilierte Schellenabschnitte auf und hat einen ersten profilierten Schellenabschnitt und einen zweiten profilierten Schellenabschnitt, mit denen unter Aufbringung einer Axialkraft zwei Flanschteile miteinander verbindbar sind. An einem Ende des ersten Schellenabschnitts ist ein erster Spannkopf und an einem Ende des zweiten Schellenabschnitts ist ein zweiter Spannkopf zur Bildung einer Spanneinrichtung ausgebildet, wobei die den Spannköpfen gegenüberliegenden Enden der Schellenabschnitte mittels einer gelenkigen Verbindung miteinander verbunden sind. Die gelenkige Verbindung ist mittels eines mechanisch oder umformtechnisch bearbeiteten Flachbandabschnitts gebildet, der einteilig mit den Schellenabschnitten verbunden ist und eine definierte Flexibilität hat, wobei durch die mechanische oder umformtechnische Bearbeitung die Flexibilität gegenüber einem unbearbeiteten Flachbandabschnitt erhöht ist.

In einer alternativen zweiten Ausführungsform weist die erfindungsgemäße Profilschelle drei profilierte Schellenabschnitte auf. Der erste profilierte Schellenabschnitt ist an dem dem Spannkopf gegenüberliegenden Ende des ersten Schellenabschnitts mittels einer ersten gelenkigen Verbindung mit einem ersten Ende eines dritten profilierten Schellenabschnitts verbunden und der zweite profilierte Schellenabschnitt ist an dem dem Spannkopf gegenüberliegenden Ende des zweiten Schellenabschnitts mittels einer zweiten gelenkigen Verbindung mit einem zweiten Ende eines dritten profilierten Schellenabschnitts verbunden.

Die Profilschelle kann in einer weiteren Ausführungsform auch mit 4 oder mehr Schellenabschnitten ausgeführt sein, wobei die Schellenabschnitte außer dem erste und dem zweiten Schellenabschnitt jeweils an beiden Enden mittels einer gelenkigen Verbindung mit den benachbarten Schellenabschnitten verbunden sind.

Das Material des Flachbandabschnittes geht einteilig d.h. einstückig und einheitlich in das Material der Schellenhälften über, so dass beide Schellenhälften einteilig bzw. einstückig miteinander verbunden sind. Die Profilschelle einschließlich des Spannkopfes besteht in einer Ausführungsform aus einem einzigen Stück Bandmaterial.

Die mechanische oder umformtechnische Bearbeitung des Flachbandabschnitts führt zu einer Erhöhung der Flexibilität im Bereich der gelenkigen Verbindung. Geeignete Verfahren zur mechanischen oder umformtechnischen Bearbeitung sind beispielsweise Biegen, Prägen, Hämmern, Walzen und spanabhebende Verfahren, bevorzugt Fräsen, Biegen, Walzen oder Schleifen. Durch die Materialausdünnung bei den spannabhebenden Verfahren bzw. die geometrische Veränderung beim Biegen kann eine definierte Steifigkeit erreicht werden und die Flexibilität wird gegenüber dem unbearbeiteten Flachbandabschnitt erhöht. Diese erlaubt eine Montage der erfindungsgemäßen Profilschelle bevorzugt per Hand ohne mechanische Hilfsmittel.

Erfindungsgemäß weist der Flachbandabschnitt als Materialausdünnung eine oder mehrere Kerben auf. Die Kerben haben einen V-förmigen Querschnitt oder einen U-förmigen Querschnitt. Es können auch beide Querschnittsformen kombiniert werden. Die Kerben erstrecken sich jeweils quer zur Umfangsrichtung der Schelle über die gesamte Materialbreite des Flachbandabschnitts. Die Kerbe durchdringen nicht die Blechdicke, sondern nehmen Material von der Oberseite des Flachbandabschnitts ab und verdünnen es hierdurch. Die Unterseite des Flachbandabschnitts bleibt bei dieser Ausführungsform unverändert und weist keine Kerben auf.

In einer weiteren Variante wird die Erhöhung der Flexibilität durch eine geometrische Veränderung des Flachbandabschnitts, bspw. durch Biegen des Flachbandabschnitts erreicht. Der mechanisch oder umformtechnisch bearbeitete Flachbandabschnitt hat in dieser Variante eine radial nach außen oder axial nach innen gebogene Ausformung, wobei die gebogene Ausformung einen U-förmigen oder V-förmigen Querschnitt hat.

Es können auch beide Varianten miteinander kombiniert werden, so dass der Flachbandabschnitt eine Materialausdünnung und eine geometrische Veränderung des Flachbandabschnitts aufweist. Die Materialausdünnung kann auch in Form eines U- oder V-förmigen Querschnittes ausgebildet sein und sich nicht über die komplette Länge des Flachbandabschnittes erstrecken. Die spezifische Materialausdünnung kann sowohl in Richtung des radial nach innen oder radial nach außen gerichteten Seite des Flachbandabschnittes eingebracht sein.

Unter "innen" wird erfindungsgemäß zum Mittelpunkt der Profilschelle gerichtet verstanden. Unter "außen" wird erfindungsgemäß aus der Profilschelle heraus, vom Mittelpunkt weg verstanden. In "axialer" Richtung bedeutet entlang der Längsachse ausgerichtet, wobei die Längsachse in Richtung der zu verbindenden Rohre durch den Kreis-Mittelpunkt der Profilschelle verläuft.

Die Schellenabschnitte bzw. Schellenhälften sind als nach innen offenes Hohlprofil ausgebildet und weisen bevorzugt eine Trapez-, Dreieck- oder Dachstruktur auf. Die Gesamtfläche der Schellenabschnitte bzw. Schellenhälften ergibt sich, wenn die Trapez-, Dreieck- oder Dachstruktur der Schellenhälften in eine flache Struktur abgewickelt wird. Die so gebildete Gesamtfläche weist eine größere Breite auf als die Breite des Flachbandabschnitts. Werden die Ränder der flachliegenden Gesamtfläche zu den Schellenabschnitten oder Schellenhälften umgebogen, um die Dreieck-, Trapez- oder Dachkantform zu erzeugen, so kann die Verjüngung des Flachbandabschnitts so dimensioniert werden, dass sich eine gleichbleibende Breite der Profilschelle zwischen den Schellenabschnitten und dem Flachbandabschnitt ergibt - in der radial projizierten Ansicht, obwohl der Flachbandabschnitt keine Profilierung aufweist.

Die gelenkige Verbindung wird aus einem Flachbandanschnitt mit einer axial nach außen oder axial nach innen gebogenen Ausformung gebildet, die Ausformung hat entweder ein U-förmiges oder ein V-förmiges Profil. Der Flachbandabschnitt weist keine Profilierung auf und ist quer zur Umfangsrichtung der Schellenabschnitte eben ausgebildet. Die Biegung des Flachbandabschnitts erfolgt um die Achse der Querrichtung des Flachbandabschnitts. Eine Biegung der Längsseiten des Flachbandabschnitts zueinander erfolgt nicht, weshalb dieser als eben in Axialrichtung bezeichnet wird.

Der Flachbandabschnitt ist ein Abschnitt mit einer Ausdehnung in Umfangsrichtung. In einer Variante der Profilschelle weist der Flachbandabschnitt gegenüber Gesamtfläche der profilierten Schellenhälften eine durch seitliche Randeinschnitte gebildete Verjüngung auf.

In einer Ausführungsform des Flachbandabschnitts mit geometrischer Veränderung hat der Flachbandabschnitt eine radial nach außen gebogene Ausformung. Die radial nach außen gebogene Ausformung hat einen U-förmigen Querschnitt oder einer V-förmigen Querschnitt. Radial nach außen gebogen bedeutet, dass der Flachbandabschnitt im Bereich der Ausformung einen größeren Abstand zur Längsachse hat als im nicht gebogenen Bereich.

In einer weiteren Ausführungsform des Flachbandabschnitts mit geometrischer Veränderung hat der Flachbandabschnitt eine radial nach innen gebogene Ausformung. Die radial nach innen gebogene Ausformung hat einen U-förmigen Querschnitt oder einer V-förmigen Querschnitt. Radial nach innen gebogen bedeutet, dass der Flachbandabschnitt im Bereich der Ausformung einen kleineren Abstand zur Längsachse hat als im nicht gebogenen Bereich.

In einer bevorzugten Ausführungsform des Flachbandabschnitts mit geometrischer Veränderung hat die gebogene Ausformung einen U-förmigen Querschnitt, bevorzugt in Form eines symmetrischen U-Profil. Der Flachbandabschnitt kann in einer Variante aus drei Abschnitten gebildet sein. Der Flachbandabschnitt weist dann einen ersten flachen Abschnitt, einen zweiten flachen Abschnitt und eine U-förmig gebogene Ausformung auf, wobei die U-förmige Ausformung die beiden flachen Abschnitte miteinander verbindet. Die beiden flachen Abschnitte sind jeweils an eine der beiden Schellenhälften angeformt.

In einer weiteren bevorzugten Ausführungsform des Flachbandabschnitts mit geometrischer Veränderung hat die gebogene Ausformung einen V-förmigen Querschnitt, bevorzugt in Form eines symmetrischen V-Profils. Der Flachbandabschnitt kann in einer Variante aus drei Abschnitten gebildet sein. Der Flachbandabschnitt weist dann einen ersten flachen Abschnitt, einen zweiten flachen Abschnitt und eine V-förmig gebogene Ausformung auf, wobei die V-förmige Ausformung die beiden flachen Abschnitte miteinander verbindet. Die beiden flachen Abschnitte sind jeweils an eine der beiden Schellenhälften angeformt.

Der Flachbandabschnitt ist bei Ausführung mit drei Abschnitten bevorzugt folgendermaßen ausgebildet: Ein erster flacher Abschnitt ist an eine erste Schellenhälfte angeformt. Am der ersten Schellenhälfte gegenüberliegenden Ende geht der erste flache Abschnitt in eine U-förmige Ausformung oder V-förmige Ausformung über, die sich in Richtung der Längsachse der Profilschelle nach innen oder nach außen erstreckt. An der dem ersten flachen Abschnitt gegenüberliegenden Ende geht die gebogene Ausformung in einen zweiten flachen Abschnitt über. Der zweite flache Abschnitt ist an seinem gegenüberliegenden Ende an die zweite Schellenhälfte angeformt.

Der Flachbandabschnitt kann so vorgespannt sein, dass die Schellenhälften im Wesentlichen zueinander geschlossen sind, so dass sich die beiden Spannköpfe gegenüberstehen. Dadurch erleichtert sich eine Montage, da die beiden Spannköpfe auf einfache Weise gegriffen werden können, um beispielsweise mit einem Schraubelement die Spanneinrichtung zu schließen.

Die beiden Spannköpfe werden mit einem Schraubelement miteinander verbunden, so dass die Profilschelle durch Festziehen des Schraubelements gespannt wird. Das Spannen, erfolgt beispielsweise mit einer Mutter, bevorzugt einer selbstsichernden Mutter, auf einem Schraubelement. Durch Anziehen der Mutter treten bei Ausführung mit Andruckfahne die beiden Andruckfahnen in Kontakt miteinander. Die Spannkraft im Endzustand ist durch die Abmessungen der Schelle ziemlich genau definiert. Fehler durch eine zu geringe oder zu hohe Spannkraft können bei richtiger Auslegung der Schelle nicht auftreten.

In einer Ausführungsform der erfindungsgemäßen Profilschelle weist der erste Spannkopf einen rechteckigen Durchgang auf, durch den ein Schraubelement mit einem komplementär ausgebildeten rechteckigen Absatz einsetzbar ist. Dadurch wird ein Verdrehen des Schraubelements verhindert, wenn dieses im ersten Spannkopf eingesetzt ist. Das Schraubelement kann rückseitig des zweiten Spannkopfs mit einer Schraubenmutter verschraubt werden, wobei die Schraubenmutter zum Schließen der Spanneinrichtung auf dem Schraubelement aufgeschraubt wird. Bevorzugt ist das Schraubelement mit einer selbstsichernden Schraubenmutter verschraubt ist.

Zur Aufbringung einer hohen Schließkraft mittels der Spanneinrichtung sind optional an den Endseiten der Spannköpfe Andruckfahnen ausgebildet, die bei einem angezogenen Schraubelement gegeneinander zur Anlage gelangen können. Dadurch wird insbesondere ein Verbiegen der Spannköpfe im Übergang in die Schellenabschnitte vermieden und die Spannköpfe bleiben parallel zueinander, wodurch sich eine bessere Verspannung der Spannköpfe ergibt. Die aufbringbare Schließkraft der Spanneinrichtung kann dadurch erhöht werden, wobei eine erhöhte Schließkraft zu einer größeren Umfangskraft in den Spannköpfen führt, die durch die erfindungsgemäße gelenkige Verbindung mittels des Flachbandabschnittes übertragen wird.

Die Flanschteile können optional eine Einbuchtung aufweisen. Durch die Einbuchtung kann eine Positionierung der Profilschelle am Flansch in Rotationsrichtung erfolgen, indem eine gebogene Ausformung an der Profilschelle in die Einbuchtung am Flansch eingreift. Die Profilschelle kann sich so beim Anziehen des Verbindungselements der beiden Spannköpfe, also beispielsweise beim Anziehen eines Schraubelements, auf dem Flansch in Umfangsrichtung nicht bzw. nur sehr begrenzt verdrehen. Da die gebogene Ausformung in die Einbuchtung am Flansch eingreift, wird eine Bewegung der Profilschelle relativ zum Flansch verhindert.

In einer Ausführungsform ist im Flachbandabschnitt ein Loch eingebracht ist. Das Loch ist bevorzugt bei einem Flachbandabschnitt mit Materialausdünnung eingebracht. Das Loch kann dabei rund, eckig oder oval ausgebildet sein. Mittels des Lochs kann eine Positionierung der Profilschelle am Flansch in Rotationsrichtung definiert werden, indem ein dem Loch zugeordneter Vorsprung am Flansch in das Loch eingreift. Ist das Loch in Umfangsrichtung länglich, beispielsweise oval ausgebildet, so bietet das Loch in Verbindung mit dem Vorsprung einen gewissen Verdrehbereich, beispielsweise zur Einjustage der Profilschelle. Zusätzlich wird der Vorteil erreicht, dass sich die Profilschelle beim Anziehen des Verbindungselements der beiden Spannköpfe, also beispielsweise beim Anziehen eines Schraubelements, auf dem Flansch in Umfangsrichtung nicht bzw. nur sehr begrenzt verdrehen kann.

Das Loch ist insbesondere so ausgestaltet, dass dieses in einer Hauptrichtung eine Abmessung von beispielsweise 3 mm bis 8 mm aufweist, wobei eine quer zur Hauptrichtung gelegene Nebenrichtung kleiner ausgebildet ist und eine Abmessung von beispielsweise 2 mm bis 4 mm aufweist. Ein entsprechender Vorsprung am Flansch, insbesondere an einem der beiden zu verbindenden Flanschteile, kann an die Abmessungen des Lochs angepasst sein.

Der Flachbandabschnitt ist flexibel ausgebildet, so dass die beiden Schellenhälften bzw. die benachbarten Schellenabschnitte aufeinander zu und voneinander wegbewegt werden können. Durch die Ausführung der gelenkigen Verbindung als Flachbandabschnitt mit U-förmiger oder V-Förmiger Ausformung entsteht eine reduzierte Biegesteifigkeit, so dass bevorzugt ohne plastische Verformungen ein Auf- und Zubiegen der Schellenhälften bzw. Schellenabschnitte zueinander mittels einer bevorzugt elastischen Verformung des Flachbandabschnittes ermöglicht wird, ohne dass der Flachbandabschnitt geschädigt wird. Der Flachbandabschnitt weist durch die gebogene Ausformung eine erhöhte Flexibilität bzw. eine für den Anwendungszweck angepasste definierte Flexibilität auf und lässt sich daher leichter montieren.

Im Vergleich zu einem bisher genutzten Verbindungselement beispielsweise in Ringform mit eingehakten Enden der Schellenhälften lassen sich über eine einteilige gelenkige Verbindung mit U-förmiger oder V-förmiger Ausformung oder definierter Ausdünnung sehr große Umfangskräfte auf die Schellenabschnitte aufbringen, so dass die Flanschteile mit einer höheren Axialkraft miteinander verbindbar sind. Weiterhin vereinfacht sich die Herstellung der Profilschelle, da die Schellenabschnitte, die Spannköpfe sowie die gelenkige Verbindung ausgehend von einem Flachbandmaterial aus einem einzigen Bauteil hergestellt werden können, ohne das weitere Fügeschritte ausgeführt werden müssen. Dieses Flachbandmaterial wird durch entsprechende Stanz-Biegeoperationen zu den beiden Schellenhälften mit dem dazwischenliegenden Flachbandabschnitt und der U/V-förmigen Ausformung oder Ausdünnung zur Bildung der gelenkigen Verbindung oder zu den drei Schellenabschnitten mit den dazwischenliegenden Flachbandabschnitten und der U/V-förmigen Ausformung oder Ausdünnung zur Bildung der gelenkigen Verbindungen hergestellt. Die erfindungsgemäße Profilschelle bietet eine einfache und schnelle Montage und ist für hohe Spannkräfte ausgelegt.

Die erfindungsgemäße Profilschelle kann für verschiedene Anwendungen eingesetzt werden. Bevorzugt wird die erfindungsgemäße Profilschelle im Bereich von Turboladern von Kraftfahrzeugen verwendet. Beispielsweise kann eine Verbindung zwischen einem Turbinengehäuse und einem zentralen Gehäuse des Turboladers mit der erfindungsgemäßen Profilschelle gesichert werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Profilschelle gemäß dem Stand der Technik,
- Fig. 2: eine nicht erfindungsgemäße Profilschelle in einer Ausführungsform,
- Fig. 3: eine nicht erfindungsgemäße Profilschelle in einer weiteren Ausführungsform,
- Fig. 4: eine nicht erfindungsgemäße Profilschelle in einer weiteren Ausführungsform mit Flanschteilen,
- Fig. 5: einen Schnitt durch eine Schellenhälfte,
- Fig. 6: eine erfindungsgemäße Profilschelle in einer weiteren Ausführungsform,
- Fig. 7: eine nicht erfindungsgemäße Profilschelle in einer weiteren Ausführungsform und
- Fig. 8: eine nicht erfindungsgemäße Profilschelle in einer weiteren Ausführungsform.

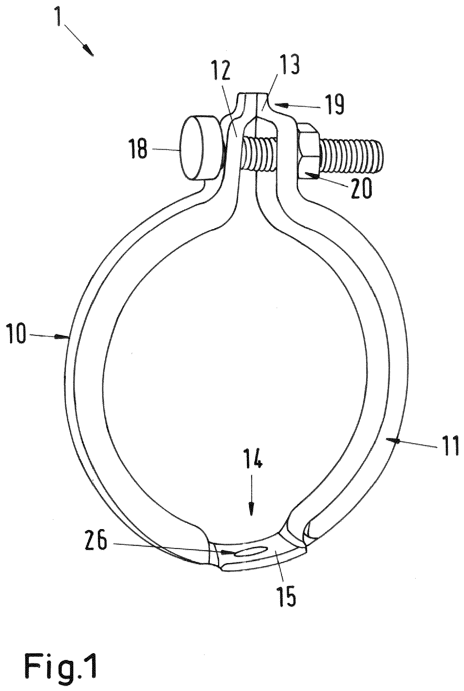

In Fig. 1 ist eine Profilschelle 1 gemäß dem Stand der Technik gezeigt, wie vorstehend beschrieben.

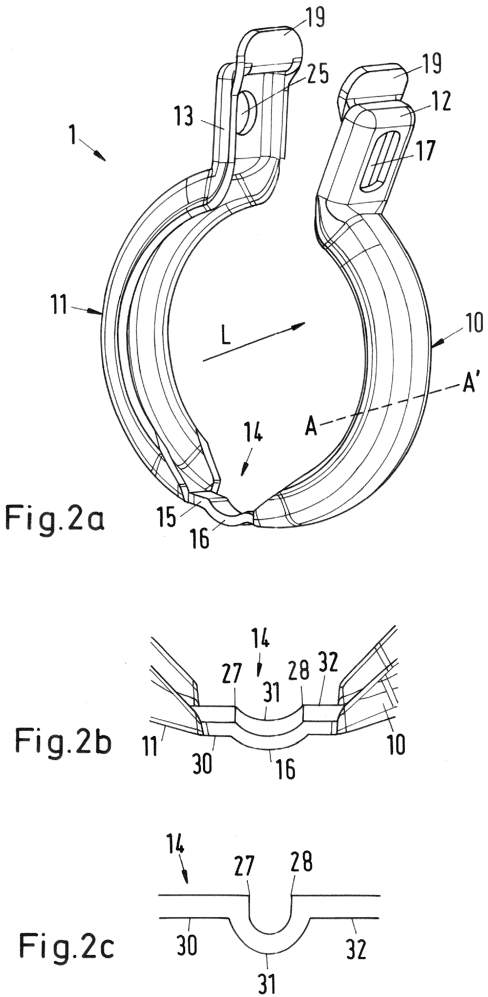

Fig. 2a zeigt eine perspektivische Ansicht einer nicht erfindungsgemäße Profilschelle 1 in einer ersten Ausführungsform. Die Profilschelle 1 weist eine erste Schellenhälfte 10 und eine zweite Schellenhälfte 11 auf. Die Schellenhälften 10 und 11 sind mit einer gelenkigen Verbindung 14 gelenkig miteinander verbunden. An den Schellenhälften 10 und 11 sind Spannköpfe 12 und 13 angeformt. Die Spannköpfe 12 und 13 sind gegenüberliegend zur gelenkigen Verbindung 14 an den Schellenhälften 10 und 11 angeformt. In den Spannköpfen 12 und 13 sind Durchgangslöcher eingebracht, wobei im ersten Spannkopf 12 ein Durchgang 17 und im zweiten Spannkopf 13 ist ein Durchgang 25 ausgebildet ist. An den freien Enden der ersten und zweiten Spannköpfe 12 und 13 befindet sich jeweils eine Andruckfahne 19. Die beiden Andruckfahnen 19 können durch Anziehen einer Mutter auf einem Schraubelement (beides nicht dargestellt) in Kontakt miteinander gebracht werden, um eine verbesserte Verspannungssituation der Schellenhälften 10 und 11 zueinander zu erreichen.

Die gelenkige Verbindung 14 ist als Flachbandabschnitt 15 mit einer Ausformung 16 ausgebildet. Die Ausformung 16 ist axial nach außen gerichtet und hat einen U-förmigen Querschnitt. Fig. 2b zeigt einen vergrößerten Ausschnitt der Profilschelle aus Fig. 2a im Bereich der gelenkigen Verbindung 14. Der Flachbandabschnitt 15 ist mit einem ersten flachen Abschnitt 30 an die zweite Schellenhälfte 11 angeformt. Am der ersten Schellenhälfte 10 gegenüberliegenden Ende 27 geht der erste flache Abschnitt 30 in eine U-förmige Ausformung 31 über, die sich in Richtung der Längsachse L der Profilschelle 1 nach außen erstreckt. An der dem ersten flachen Abschnitt 30 gegenüberliegenden Ende 28 geht die U-förmige Ausformung 31 in einen zweiten flachen Abschnitt 32 über. Der zweite flache Abschnitt 32 ist an seinem gegenüberliegenden Ende an die erste Schellenhälfte 10 angeformt. Fig. 2 c zeigt schematisch die Form der gelenkigen Verbindung 14 aus Fig. 2b.

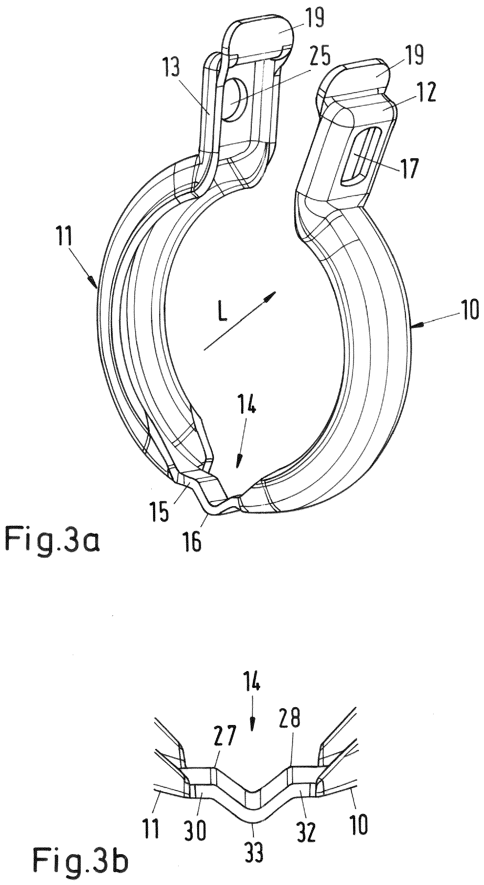

Fig. 3a zeigt eine perspektivische Ansicht einer nicht erfindungsgemäße Profilschelle 1 in einer zweiten Ausführungsform. Die gelenkige Verbindung 14 ist als Flachbandabschnitt 15 mit einer Ausformung 16 ausgebildet, die radial nach außen gerichtet ist und einen V-förmigen Querschnitt hat. Fig. 3b zeigt einen vergrößerten Ausschnitt der Profilschelle aus Fig. 3a im Bereich der gelenkigen Verbindung 14. Der Flachbandabschnitt 15 ist mit einem ersten flachen Abschnitt 30 an die zweite Schellenhälfte 11 angeformt. Am der ersten Schellenhälfte 10 gegenüberliegenden Ende 27 geht der erste flache Abschnitt 30 in eine V-förmige Ausformung 33 über, die sich radial nach außen erstreckt. An der dem ersten flachen Abschnitt 30 gegenüberliegenden Ende 28 geht die V-förmige Ausformung 33 in einen zweiten flachen Abschnitt 32 über. Der zweite flache Abschnitt 32 ist an seinem gegenüberliegenden Ende an die erste Schellenhälfte 10 angeformt.

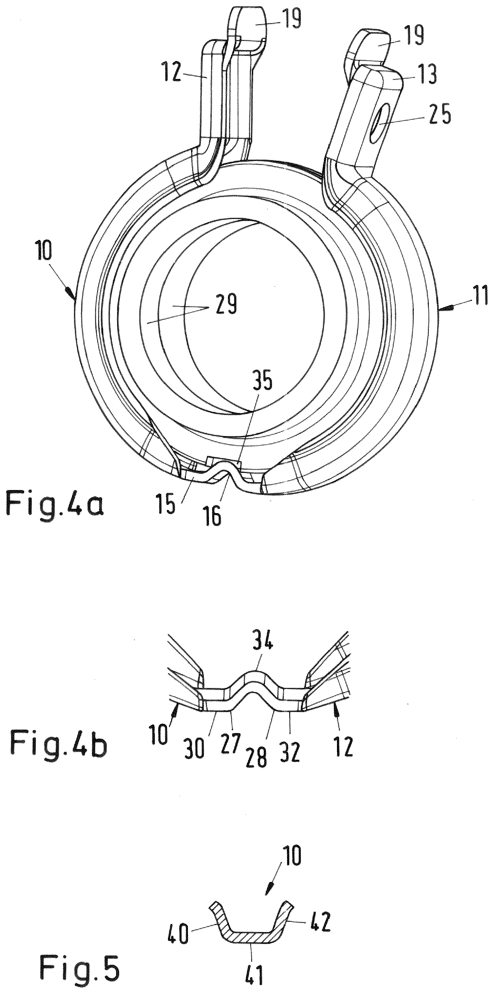

Fig. 4a zeigt eine perspektivische Ansicht einer nicht erfindungsgemäße Profilschelle 1 in einer dritten Ausführungsform. Die gelenkige Verbindung 14 ist als Flachbandabschnitt 15 mit einer Ausformung 16 ausgebildet, die radial nach innen gerichtet ist und einen V-förmigen Querschnitt hat. Im Inneren der Profilschelle 1 sind zwei Flanschteile 29 von zwei zu verbindenden Rohren angeordnet, die von den Schellenhälften 10, 11 umschlossen werden. Im Bereich der gelenkigen Verbindung 14 weist der Flansch eine Einbuchtung 35 auf. Die Einbuchtung 35 ist als Ausnehmung im Flansch 29 ausgestaltet, in die die V-förmige Ausformung 16 eingreift und so eine Bewegung der Profilschelle in Umfangsrichtung relativ zum Flansch verhindert. Fig. 4b zeigt einen vergrößerten Ausschnitt der Profilschelle aus Fig. 4a im Bereich der gelenkigen Verbindung 14. Der Flachbandabschnitt 15 ist mit einem ersten flachen Abschnitt 30 an die erste Schellenhälfte 10 angeformt. Am der ersten Schellenhälfte 10 gegenüberliegenden Ende 27 geht der erste flache Abschnitt 30 in eine V-förmige Ausformung 34 über, die sich radial nach innen erstreckt. An der dem ersten flachen Abschnitt 30 gegenüberliegenden Ende 28 geht die V-förmige Ausformung 33 in einen zweiten flachen Abschnitt 32 über. Der zweite flache Abschnitt 32 ist an seinem gegenüberliegenden Ende an die zweite Schellenhälfte 11 angeformt.

Fig. 5 zeigt einen Schnitt durch die erste Schellenhälfte 10 entlang der Linie A-A' in Fig. 2a. Es ist zu erkennen, dass die Schellenhälfte ein Trapez-Profil hat. Das Trapez-Profil wird durch die Schenkel 40 und 42 und den Basisabschnitt 41 ausgebildet. Der Basisabschnitt 41 verbindet dabei die beiden Schenkel 40 und 42 miteinander.

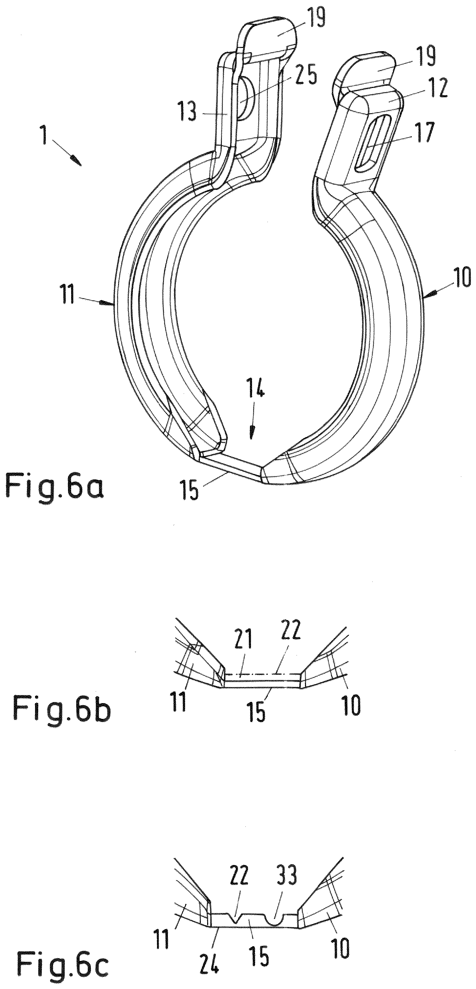

Fig. 6a zeigt eine perspektivische Ansicht einer nicht erfindungsgemäße Profilschelle 1 in einer weiteren Ausführungsform. Die gelenkige Verbindung 14 ist als Flachbandabschnitt 15 mit einer Materialausdünnung 21 ausgebildet. Fig. 6b zeigt einen vergrößerten Ausschnitt der Profilschelle aus Fig. 6a im Bereich der gelenkigen Verbindung 14. Der Flachbandabschnitt 15 weist gegenüber den Schellenhälften eine geringe Materialstärke auf. Die gestrichelte Linie 22 verdeutlich die Materialstärke der Schellenhälfte und dient nur der Illustration der Materialausdünnung 21. Die Materialausdünnung erstreckt sich in der gezeigten Form über die gesamte Länge des Flachbandabschnitts 15. Alternativ kann die Materialausdünnung auch in Form eines U- oder V-förmigen Querschnittes ausgebildet sein und sich nicht über die komplette Länge des Flachbandabschnittes erstrecken. Die spezifische Materialausdünnung kann sowohl in Richtung des radial nach innen oder radial nach außen gerichteten Seite des Flachbandabschnittes eingebracht sein. Fig. 6c zeigt eine erfindungsgemäße Ausführungsform des Flachbandabschnitts 15 mit Materialausdünnung. Der Flachbandabschnitt in Fig. 6c weist zwei nebeneinander angeordnete Materialausdünnungen auf, eine Kerbe 22 mit einem V-förmigen Querschnitt und eine Kerbe 23 mit einem U-förmigen Querschnitt. Die Kerben sind jeweils als Querrillen quer zur Umfangsrichtung der Schelle über die gesamte Materialbreite des Flachbandabschnitts ausgeführt.

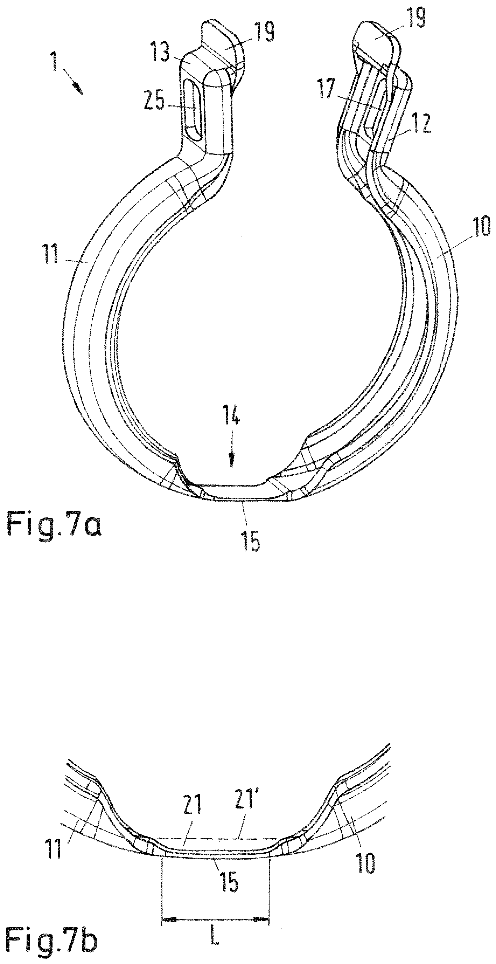

Fig. 7a zeigt eine perspektivische Ansicht einer nicht erfindungsgemäßen Profilschelle 1 in einer weiteren Ausführungsform. Die gelenkige Verbindung 14 ist wie bei der in Fig. 6 dargestellten profilschelle ebenfalls als Flachbandabschnitt 15 mit einer Materialausdünnung 21 ausgebildet. Fig. 7b zeigt einen vergrößerten Ausschnitt der Profilschelle aus Fig. 7a im Bereich der gelenkigen Verbindung 14. Der Flachbandabschnitt 15 weist gegenüber den Schellenhälften eine geringere Materialstärke in Form einer Materialausdünnung 21 auf. Die gestrichelte Linie 21' verdeutlich die Materialstärke der Schellenhälfte und dient nur der Illustration der Materialausdünnung 21. Durch die Materialausdünnung mit Walzen ist auch die Länge L des Flachbandabschnitts 15 verlängert worden. Der Materialbandabschnitt 15 in Fig. 7a und 7 b ist daher länger als der verdünnte Materialbandabschnitt in Fig. 6a und 6b.

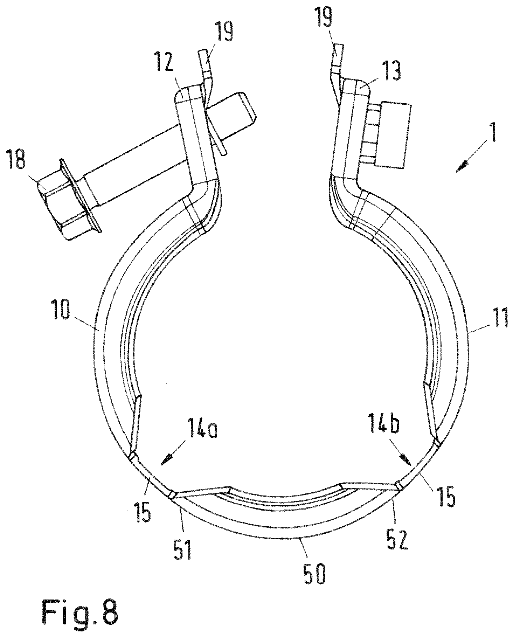

Fig. 8 zeigt eine perspektivische Ansicht einer nicht erfindungsgemäßen Profilschelle 1 in einer weiteren Ausführungsform mit drei Schellenabschnitten. Die Profilschelle 1 weist einen ersten profilierten Schellenabschnitt 10, einen zweiten profilierten Schellenabschnitt 11 und einen dritten profilierten Schellenabschnitt 50 auf. Der erste Schellenabschnitt 10 ist mit einer ersten gelenkigen Verbindung 14a gelenkig mit dem dritten Schellenabschnitt 50 an dessen ersten Ende 51 verbunden. Der zweite Schellenabschnitt 11 ist mit einer zweiten gelenkigen Verbindung 14b gelenkig mit dem dritten Schellenabschnitt 50 an dessen zweiten Ende 52 verbunden. Die Spannköpfe 12 und 13 sind gegenüberliegend zu dem dritten Schellenabschnitt 50 an den Schellenabschnitten 10 und 11 angeformt. In den Spannköpfen 12 und 13 sind Durchgangslöcher eingebracht, wobei im ersten Spannkopf 12 ein Durchgang 17 und im zweiten Spannkopf 13 ist ein Durchgang 25 ausgebildet ist. An den freien Enden der ersten und zweiten Spannköpfe 12 und 13 befindet sich jeweils eine Andruckfahne 19. Die beiden Andruckfahnen 19 können durch Anziehen einer Mutter 20 auf einem Schraubelement 18 in Kontakt miteinander gebracht werden, um eine verbesserte Verspannungssituation der Schellenabschnitte und 11 zueinander zu erreichen. Die beiden gelenkigen Verbindungen 14a, 14b sind als Flachbandabschnitt 15 mit einer Materialverjüngung 21 ausgebildet.

## Patentansprüche

1. Profilschelle (1) mit einem ersten profilierten Schellenabschnitt (10) und mit einem zweiten profilierten Schellenabschnitt (11), optional mit mindestens einem weiteren profilierten Schellenabschnitt (50), wobei mit den Schellenabschnitten (10, 11, 50) unter Aufbringung einer Axialkraft zwei Flanschteile miteinander verbindbar sind, wobei an einem Ende des ersten Schellenabschnitts (10) ein erster Spannkopf (12) und an einem Ende des zweiten Schellenabschnitts (11) ein zweiter Spannkopf (13) zur Bildung einer Spanneinrichtung ausgebildet sind, wobei die den Spannköpfen (12, 13) gegenüberliegenden Enden der Schellenabschnitte (10, 11) mittels einer gelenkigen Verbindung (14) miteinander oder mit mindestens einem der weiteren Schellenabschnitte (50) der Profilschelle (1) verbunden sind, wobei die gelenkige Verbindung (14) mittels eines mechanisch oder umformtechnisch bearbeiteten Flachbandabschnitts (15) gebildet ist, der einteilig mit den Schellenabschnitten verbunden ist und eine definierte Flexibilität hat, wobei der Flachbandabschnitt (15) in einer Blechdickenrichtung des Flachbandabschnitts (15) eine gegenüber den Schellenabschnitten reduzierte Materialstärke hat, wobei der Flachbandabschnitt (15) mindestens eine Kerbe (22, 23) mit einem U-förmigen oder V-förmigen Querschnitt hat, wobei die reduzierte Materialstärke durch die Kerbe (22, 23) erzeugt wurde, wobei die Kerbe (22, 23) sich quer zu einer Umfangsrichtung der Profilschelle (1) über die gesamte Materialbreite des Flachbandabschnitts (15) erstreckt, wobei der Flachbandabschnitt (15) eine zu einem Mittelpunkt der Profilschelle (1) gerichtete Innenseite und eine von dem Mittelpunkt der Profilschelle (1) weg gerichtete Außenseite aufweist, wobei die Kerbe (22, 23) lediglich Material von der Innenseite des Flachbandabschnitts (15) abnimmt und die Blechdicke nicht durchdringt, wobei die Kerbe (22, 23) derart ausgebildet ist, dass die Außenseite des Flachbandabschnitts (15) unverändert bleibt und keine Kerben aufweist.

2. Profilschelle (1) nach Anspruch 1, **dadurch gekennzeichnet, dass** die Profilschelle zwei profilierte Schellenabschnitte (10, 11) als profilierte Schellenhälften aufweist und der erste profilierte Schellenabschnitt (10) eine erste profilierte Schellenhälfte (10) ist und der zweite profilierte Schellenabschnitt (11) eine zweite profilierte Schellenhälfte (11) ist und die den Spannköpfen (12, 13) gegenüberliegenden Enden der Schellenhälften (10, 11) mittels einer gelenkigen Verbindung (14) miteinander verbunden sind.

3. Profilschelle (1) nach Anspruch 1, **dadurch gekennzeichnet, dass** die Profilschelle drei profilierte Schellenabschnitte (10, 11, 50) aufweist und der erste profilierte Schellenabschnitt (10) an dem dem Spannkopf (12) gegenüberliegenden Ende des Schellenabschnitts (10) mittels einer ersten gelenkigen Verbindung (14) mit einem ersten Ende eines dritten profilierten Schellenabschnitts (50) verbunden ist und der zweite profilierte Schellenabschnitt (11) an dem dem Spannkopf (13) gegenüberliegenden Ende des Schellenabschnitts (11) mittels einer zweiten gelenkigen Verbindung (14) mit einem zweiten Ende eines dritten profilierten Schellenabschnitts (50) verbunden ist.

4. Profilschelle (1) nach einem der vorhergehenden Ansprüche, **dadurch gekennzeichnet, dass** der Flachbandabschnitt (15) eine radial nach außen oder radial nach innen gebogenen Ausformung (16) hat und die gebogene Ausformung (16) einen U-förmigen oder V-förmigen Querschnitt hat.

5. Profilschelle (1) nach Anspruch 4, **dadurch gekennzeichnet, dass** der Flachbandabschnitt (15) eine radial nach außen gebogene Ausformung (16) hat.

6. Profilschelle (1) nach Anspruch 4, **dadurch gekennzeichnet, dass** der Flachbandabschnitt (15) eine radial nach innen gebogene Ausformung hat.

7. Profilschelle (1) nach einem der Ansprüche 4 bis 6, **dadurch gekennzeichnet, dass** die gebogene Ausformung (16) einen U-förmigen Querschnitt hat.

8. Profilschelle (1) nach Anspruch 7, **dadurch gekennzeichnet, dass** der Flachbandabschnitt (15) einen ersten flachen Abschnitt (30), einen zweiten flachen Abschnitt (32) und eine U-förmige Ausformung (31, 34) aufweist, wobei die U-förmige Ausformung (31) die beiden flachen Abschnitte (30, 32) miteinander verbindet, wobei die flachen Abschnitte jeweils an eine der beiden Schellenhälften (10, 11) angeformt sind.

9. Profilschelle (1) nach einem der Ansprüche 4 bis 6, **dadurch gekennzeichnet, dass** die gebogene Ausformung (16) einen V-förmiges Querschnitt hat.

10. Profilschelle (1) nach Anspruch 9, **dadurch gekennzeichnet, dass** der Flachbandabschnitt (15) einen ersten flachen Abschnitt (30), einen zweiten flachen Abschnitt (32) und eine V-förmige Ausformung (33) aufweist, wobei die V-förmige Ausformung (31) die beiden flachen Abschnitte (30, 32) miteinander verbindet, wobei die flachen Abschnitte jeweils an ein der beiden Schellenhälften (10, 11) angeformt sind.

11. Profilschelle (1) nach einem der vorhergehenden Ansprüche, **dadurch gekennzeichnet, dass** an den Endseiten der Spannköpfe (12, 13) Andruckfahnen (19) ausgebildet sind, die bei einem angezogenen Schraubelement (18) gegeneinander zur Anlage gelangen.

12. Profilschelle (1) nach Anspruch 11, **dadurch gekennzeichnet, dass** das Schraubelement (18) mit einer selbstsichernden Schraubenmutter (20) verschraubt ist.

13. Profilschelle (1) nach einem der vorhergehenden Ansprüche, **dadurch gekennzeichnet, dass** der erste Spannkopf (12) einen rechteckigen Durchgang (17) aufweist, durch den ein Schraubelement (18) mit einem komplementär ausgebildeten rechteckigen Absatz einsetzbar ist.

## Claims

1. Profile clamp (1) having a first profiled clamp section (10) and having a second profiled clamp section (11), optionally having at least one further profiled clamp section (50), wherein by way of the clamp sections (10, 11, 50) two flange parts are connectable to each other with the application of an axial force, wherein a first tightening head (12) is formed at one end of the first clamp section (10) and a second tightening head (13) is formed at one end of the second clamp section (11) in order to form a tightening device, wherein the ends of the clamp sections (10, 11) which are located opposite the tightening heads (12, 13) are connected to each other or to at least one of the further clamp sections (50) of the profile clamp (1) by means of an articulated connection (14), wherein the articulated connection (14) is formed by means of a flat band section (15) which is mechanically machined or formed and is integrally connected to the clamp sections and has a defined flexibility, wherein the flat band section (15) in a sheet thickness direction of the flat band section (15) has a material thickness reduced compared to the clamp sections, wherein the flat band section (15) has at least one notch (22, 23) with a U-shaped or V-shaped cross section, wherein the reduced material thickness has been generated by the notch (22, 23), wherein the notch (22, 23) extends transversely to a circumferential direction of the profile clamp (1) over the entire material width of the flat band section (15), wherein the flat band section (15) has an inside face directed towards a centre of the profile clamp (1) and an outside face directed away from the centre of the profile clamp (1), wherein the notch (22, 23) subtracts material only from the inside face of the flat band section (15) and does not penetrate the sheet metal thickness, wherein the notch (22, 23) is formed in such a manner that the outside face of the flat band section (15) remains unchanged and has no notches.

2. Profile clamp (1) according to Claim 1, **characterized in that** the profile clamp has two profiled clamp sections (10, 11) as profiled clamp halves, and the first profiled clamp section (10) is a first profiled clamp half (10), and the second profiled clamp section (11) is a second profiled clamp half (11), and the ends of the clamp halves (10, 11) which are located opposite the tightening heads (12, 13) are connected to each other by means of an articulated connection (14).

3. Profile clamp (1) according to Claim 1, **characterized in that** the profile clamp has three profiled clamp sections (10, 11, 50), and the first profiled clamp section (10) at the end of the clamp section (10) which is located opposite the tightening head (12) is connected by means of a first articulated connection (14) to a first end of a third profiled clamp section (50), and the second profiled clamp section (11) at the end of the clamp section (11) which is located opposite the tightening head (13) is connected by means of a second articulated connection (14) to a second end of a third profiled clamp section (50).

4. Profile clamp (1) according to one of the preceding claims, **characterized in that** the flat band section (15) has a radially outwardly or radially inwardly bent form (16) and the bent form (16) has a U-shaped or V-shaped cross section.

5. Profile clamp (1) according to Claim 4, **characterized in that** the flat band section (15) has a radially outwardly bent form (16).

6. Profile clamp (1) according to Claim 4, **characterized in that** the flat band section (15) has a radially inwardly bent form.

7. Profile clamp (1) according to one of Claims 4 to 6, **characterized in that** the bent form (16) has a U-shaped cross section.

8. Profile clamp (1) according to Claim 7, **characterized in that** that the flat band section (15) has a first flat section (30), a second flat section (32) and a U-shaped form (31, 34), wherein the U-shaped form (31) connects the two flat sections (30, 32) with each other, wherein the flat sections are each formed on one of the two clamp halves (10, 11).

9. Profile clamp (1) according to one of Claims 4 to 6, **characterized in that** the bent form (16) has a V-shaped cross section.

10. Profile clamp (1) according to Claim 9, **characterized in that** that the flat band section (15) has a first flat section (30), a second flat section (32) and a V-shaped form (33), wherein the V-shaped form (31) connects the two flat sections (30, 32) with each other, wherein the flat sections are each formed on one of the two clamp halves (10, 11).

11. Profile clamp (1) according to one of the preceding claims, **characterized in that** pressure lugs (19) are formed on the end sides of the tightening heads (12, 13), which lugs reach each other when a screw element (18) is tightened.

12. Profile clamp (1) according to Claim 11, **characterized in that** the screw element (18) is screwed home with a self-locking screw nut (20).

13. Profile clamp (1) according to one of the preceding claims, **characterized in that** the first tightening head (12) has a rectangular passage (17) through which a screw element (18) with a complementary rectangular shoulder can be inserted.

## Revendications

1. Collier de serrage profilé (1) présentant une première section de collier (10) profilée et une deuxième section de collier (11) profilée, présentant éventuellement au moins une section de collier (50) profilée supplémentaire, les sections de collier (10, 11, 50) permettant de relier entre elles, par application d'une force axiale, deux parties de bride, une première tête de serrage (12) étant réalisée au niveau d'une extrémité de la première section de collier (10) et une deuxième tête de serrage (13) étant réalisée au niveau d'une extrémité de la deuxième section de collier (11) pour la formation d'un dispositif de serrage, les extrémités opposées aux têtes de serrage (12, 13) des sections de collier (10, 11) étant reliées au moyen d'une liaison articulée (14) entre elles ou à au moins l'une des sections de collier (50) supplémentaires du collier de serrage profilé (1), la liaison articulée (14) étant formée au moyen d'une section de bande plate (15), usinée mécaniquement ou par une technique de moulage, qui est reliée d'une seule pièce aux sections de collier et qui présente une flexibilité définie, la section de bande plate (15) présentant, dans une direction d'épaisseur de tôle de la section de bande plate (15), une épaisseur de matériau réduite par rapport à celle des sections de collier, la section de bande plate (15) présentant au moins une encoche (22, 23) de section transversale en forme de U ou de V, l'épaisseur de matériau réduite ayant été générée par l'encoche (22, 23), l'encoche (22, 23) s'étendant transversalement par rapport à une section périphérique du collier de serrage profilé (1) sur toute la largeur de matériau de la section de bande plate (15), la section de bande plate (15) présentant une face interne orientée vers un point central du collier de serrage profilé (1) et une face externe orientée à l'opposé du point centrale du collier de serrage profilé (1), l'encoche (22, 23) ne retirant du matériau que de la face interne de la section de bande plate (15) et ne pénétrant pas dans l'épaisseur de la tôle, l'encoche (22, 23) étant réalisée de telle sorte que la face externe de la section de bande plate (15) reste inchangée et ne présente pas d'encoches.

2. Collier de serrage profilé (1) selon la revendication 1, **caractérisé en ce que** le collier de serrage profilé présente deux sections de collier (10, 11) profilées en tant que moitiés de collier profilées et la première section de collier (10) profilée étant une première moitié de collier (10) profilée et la deuxième section de collier (11) profilée étant une deuxième moitié de collier (11) profilée et les extrémités opposées aux têtes de serrage (12, 13) des moitiés de collier (10, 11) étant reliées entre elles au moyen d'une liaison articulée (14).

3. Collier de serrage profilé (1) selon la revendication 1, **caractérisé en ce que** le collier de serrage profilé présente trois sections de collier (10, 11, 50) profilées et la première section de collier (10) profilée étant reliée, au niveau de l'extrémité opposée à la tête de serrage (12) de la section de collier (10), au moyen d'une première liaison articulée (14) à une première extrémité d'une troisième section de collier (50) profilée et la deuxième section de collier (11) profilée étant reliée, au niveau de l'extrémité opposée à la tête de serrage (13) de la section de collier (11), au moyen d'une deuxième liaison articulée (14) à une deuxième extrémité d'une troisième section de collier (50) profilée.

4. Collier de serrage profilé (1) selon l'une des revendications précédentes, **caractérisé en ce que** la section de bande plate (15) présente un renflement (16) courbé radialement vers l'extérieur ou radialement vers l'intérieur et le renflement (16) courbé présentant une section transversale en forme de U ou de V.

5. Collier de serrage profilé (1) selon la revendication 4, **caractérisé en ce que** la section de bande plate (15) présente un renflement (16) courbé radialement vers l'extérieur.

6. Collier de serrage profilé (1) selon la revendication 4, **caractérisé en ce que** la section de bande plate (15) présente un renflement courbé radialement vers l'intérieur.

7. Collier de serrage profilé (1) selon l'une des revendications 4 à 6, **caractérisé en ce que** le renflement (16) courbé présente une section transversale en forme de U.

8. Collier de serrage profilé (1) selon la revendication 7, **caractérisé en ce que** la section de bande plate (15) présente une première section plate (30), une deuxième section plate (32) et un renflement (31, 34) en forme de U, le renflement (31) en forme de U reliant les deux sections plates (30, 32) entre elles, les sections plates étant moulées à chaque fois au niveau de l'une des deux moitiés de collier (10, 11).

9. Collier de serrage profilé (1) selon l'une des revendications 4 à 6, **caractérisé en ce que** le renflement (16) courbé présente une section transversale en forme de V.

10. Collier de serrage profilé (1) selon la revendication 9, **caractérisé en ce que** la section de bande plate (15) présente une première section plate (30), une deuxième section plate (32) et un renflement (33) en forme de V, le renflement (31) en forme de V reliant les deux sections plates (30, 32) entre elles, les sections plates étant moulées à chaque fois au niveau de l'une des deux moitiés de collier (10, 11).

11. Collier de serrage profilé (1) selon l'une des revendications précédentes, **caractérisé en ce que** des ailettes de pressage (19) sont réalisées au niveau des faces d'extrémité des têtes de serrage (12, 13), lesquelles ailettes arrivent à butée l'une contre l'autre lorsqu'un élément de vis (18) est serré.

12. Collier de serrage profilé (1) selon la revendication 11, **caractérisé en ce que** l'élément de vis (18) est vissé à l'aide d'un écrou (20) autobloquant.

13. Collier de serrage profilé (1) selon l'une des revendications précédentes, **caractérisé en ce que** la premier tête de serrage (12) présente un passage rectangulaire (17) à travers lequel un élément de vis (18) présentant un épaulement rectangulaire réalisé de manière complémentaire peut être inséré.
